# EUROPEAN PATENT APPLICATION

(11) **EP 2 659 781 A1**
(43) Date of publication of application: **06.11.2013**
(21) Application number: 11853734.9
(22) Date of filing: 28.12.2011
(51) Int. Cl.: A23F 3/16

(54) **METHOD FOR PRODUCING PURIFIED TEA EXTRACT**

(30) Priority: 28.12.2010 JP 2010292567
(71) Applicant: Kao Corporation, Chuo-Ku Tokyo 103-8210 (JP)
(72) Inventor: ITO, Takuma, Kamisu-shi Ibaraki 314-0103 (JP); SHIKATA, Kenichi, Kamisu-shi Ibaraki 314-0103 (JP); SATO, Hitoshi, Kamisu-shi Ibaraki 314-0103 (JP); MARUYAMA, Eizo, Kamisu-shi Ibaraki 314-0103 (JP)
(74) Representative: HOFFMANN EITLE
(86) International application number: PCT/JP2011/080509
(87) International publication number: WO 2012/091135

(57) **Abstract**

Provided is a production method for a purified tea extract, which enables efficiently removing gallic acid and collecting the non-polymer catechins in a high yield without impairing original taste and flavor of tea. The production method for a purified tea extract according to the present invention comprises bringing a tea extract into contact with an OH-type anion exchange resin and an H-type cation exchange resin.

## Description

### Field of the Invention

The present invention relates to a production method for a purified tea extract.

### Background of the Invention

With diversifying consumer's preference and increasing health consciousness, a tea beverage has attracted attention. The tea beverage can be produced by, f or example, blending the non-polymer catechins in a dissolved state using a tea extract or the like. However, the tea extract blended in the tea beverage may deteriorate the original taste and flavor of tea owing to bitterness and astringency due to gallate forms of the non-polymer catechins in the tea extract or owing to sourness due to gallic acid, oxalic acid, quinic acid, or the like in some cases.

As means for reducing bitterness and astringency derived from the gallate forms of the non-polymer catechins, there has been known, for example, a method involving subjecting a tea extract to a tannase treatment to hydrolyze gallate forms of the non-polymer catechins into the non-polymer catechins and gallic acid. However, the method reduces the bitterness and astringency derived from the gallate forms of the non-polymer catechins but enhances sourness owing to released gallic acid.

To improve such problems, there has been proposed, for example, a method involving subjecting a tea extract solution to a tannase treatment and removing released gallic acid by contact with a commercially available anion exchange resin (Patent Document 1). In addition, there has been proposed a method involving bringing a tea extract solution subjected to a tannase treatment into contact with an L-ascorbic acid-type anion exchange resin to selectively remove gallic acid (Patent Document 2).

### Citation List

### Patent Document

[Patent Document 1] JP-A-2007-195458
[Patent Document 2] JP-A-2008-220202

### Summary of the Invention

The present invention provides a production method for a purified tea extract, comprising bringing a tea extract into contact with an OH-type anion exchange resin and an H-type cation exchange resin.

### Embodiment for Carrying out the Invention

A commercially available anion exchange resin is supplied as a Cl-type or OH-type anion exchange resin. However, it has been found that there is a problem in that, when a tea extract is brought into contact with the Cl-type anion exchange resin, the taste and flavor deteriorates owing to generation of coarseness. This is probably caused by counterions desorbed simultaneously with adsorption of gallic acid to the anion exchange resin. In addition, it has been found that there is a problem in that, when the tea extract is brought into contact with the OH-type anion exchange resin, an increase in pH causes deterioration of the non-polymer catechins, a significant decrease in the yield of the non-polymer catechins, and generation of coarseness to deteriorate the taste and flavor.
In addition, the method involving bringing the tea extract into contact with the L-ascorbic acid-type anion exchange resin may cause changes in the taste and flavor and low adsorption ef ficiency of gallic acid. Therefore, development of a production method which can more efficiently remove gallic acid has been required.
The present invention provides a production method for a purified tea extract, which enables efficiently removing gallic acid and recovering the non-polymer catechins in a high yield without causing an increase in pH and deterioration of the taste and flavor.

The inventors of the present invention have made various studies in view of the above-mentioned problems, and as a result, they found that, when a tea extract is brought into contact with a combination of a specific anion exchange resin and a specific cation exchange resin, it is possible to efficiently remove gallic acid and to recover the non-polymer catechins in a high yield without causing an increase in pH and deterioration of the taste and flavor such as coarseness due to ionic desorption.

According to the present invention, it is possible to efficiently remove gallic acid and to recover the non-polymer catechins in a high yield. In addition, the present invention allows a larger amount of a tea extract to flow through an ion exchange resin without causing an increase in pH and deterioration of the taste and flavor such as coarseness, and is very excellent in productivity. Therefore, the production method of the present invention can significantly reduce labor and cost for production.

The production method for a purified tea extract of the present invention is described below.
The production method for a purified tea extract of the present invention comprises bringing a tea extract into contact with an OH-type anion exchange resin and an H-type cation exchange resin.

Examples of the "tea extract" used in the present invention includes a tea extract solution or a concentrated tea extract solution, and the tea extract may have various forms such as a solid, a liquid, a solution, and a slurry.
The term "tea extract solution" as used herein refers to a product which is obtained by an extraction such as kneader extraction or column extraction from a tea with hot water or a hydrophilic organic solvent, and is not subjected to a concentration or purification procedure. It should be noted that as the hydrophilic organic solvent, an alcohol such as ethanol may be used, for example.
In addition, the term "concentrated tea extract solution" refers to a product having an increased concentration of the non-polymer catechins and obtained by removing, from the tea extract solution obtained by an extraction from a tea with water or a hydrophilic organic solvent, at least part of the solvent, and may be prepared by, for example, methods described in JP-A-59-219384, JP-A-04--20589, JP-A-05-260907, and JP-A-05-306279.

Examples of the tea used for the extraction include a tea tree selected from the genus *Camellia,* for example, C. var. *sinensis* (including the Yabukita variety), C. var. *assamica,* and hybrids thereof. The tea tree is roughly classified into unfermented tea, semi-fermented tea, and fermented tea, depending on the processing methods.
Examples of the unfermented tea include green tea such as sencha, bancha, tencha, kamairicha, kukicha, bocha, or mecha. In addition, examples of the semi-fermented tea include oolong tea such as tekkannon, shikisyu, ogonkei, or buigancha. Further, examples of the fermented tea include black tea such as Darjeeling, Assam, or Sri Lanka. Those teas may be used alone or in combination of two or more thereof. Of those, green tea is preferred from the viewpoint of the content of the non-polymer catechins.
The term "non-polymer catechins" as used herein is a collective term for both of non-epi-form catechins such as catechin, gallocatechin, catechin gallate, and gallocatechin gallate, and epi-form catechins such as epicatechin, epigallocatechin, epicatechin gallate, and epigallocatechin gallate. The concentration of the non-polymer catechins is defined based on the total amount of the above-mentioned eight catechins.

In the present invention, as a tea extract solution or a concentrate thereof in the form of solids, for example, commercially available products such as "POLYPHENON" manufactured by Mitsui Norin Co., Ltd. , "TEAFURAN" manufactured by ITO EN, LTD. , and "SUNPHENON" manufactured by Taiyo Kagaku Co., Ltd. may be used.

The tea extract used in the present invention may contain a solvent. Water is preferably used as the solvent, and the solvent may further contain an organic solvent. Examples of the organic solvent include a hydrophilic organic solvent from the viewpoint of the dissociation property of a substance to be adsorbed. Specific examples thereof include a ketone such as acetone and an alcohol such as methanol or ethanol. Of those, an alcohol is preferred, and ethanol is more preferred from the viewpoint of use in foods and beverages. It should be noted that in the case of using the organic solvent, the concentration of the organic solvent in the organic solvent aqueous solution may be appropriately selected. However, from the viewpoints of the taste and flavor, the efficiency of removal of gallic acid, and the yield of the non-polymer catechins, the lower limit of the concentration is preferably 10 mass%, more preferably 30 mass%, even more preferably 50 mass%, while the upper limit of the concentration is preferably 95 mass%, more preferably 90 mass%, more preferably 85 mass%, more preferably 80 mass%, more preferably 75 mass%, even more preferably 70 mass%. The concentration of the organic solvent in the organic solvent aqueous solution ranges preferably from 10 to 95 mass%, more preferably from 30 to 90 mass%, more preferably from 50 to 85 mass%, more preferably from 50 to 80 mass%, more preferably from 50 to 75 mass%, even more preferably from 50 to 70 mass%.

In addition, in the present invention, the tea extract may be used after a tannase treatment. The term "tannase treatment" refers to a procedure for bringing the tea extract into contact with an enzyme having a tannase activity. Examples of the enzyme having a tannase activity include tannase obtained by culturing a tannase-producing bacterium belonging to the genus *Aspergillus, Penicillium,* or *Rhizopus.* Of those, tannase derived from *Aspergillus oryzae* is preferred. It should be noted that as a specific operation method for the tannase treatment, a known method may be employed, and examples thereof include a method described in JP-A-2004-321105.

The gallate forms of the non-polymer catechins are hydrolyzed by the tannase treatment into non-gallate forms and gallic acid. The term "gallate forms of the non-polymer catechins (hereinafter also simply referred to as "gallate forms")" as used herein is a collective term for catechin gallate, gallocatechin gallate, epicatechin gallate, epigallocatechin gallate, and the like. The term "ratio of gallate forms" refers to a mass ratio of the above-mentioned four gallate forms relative to the total amount of the non-polymer catechins. The ratio of gallate forms in the tea extract ranges preferably from 5 to 60 mass%, more preferably from 10 to 50 mass%, more preferably from 20 to 40 mass%, even more preferably from 25 to 40 mass%.
The production method of the present invention is effective in purification of a tea extract after the tannase treatment because gallic acid can be removed efficiently.

The concentration of the non-polymer catechins in the tea extract used in the present invention ranges preferably from 0.1 to 15 mass%, more preferably from 0.5 to 10 mass%, more preferably from 0.8 to 5 mass%, even more preferably from 1 to 5 mass% from the viewpoints of the efficiency of removal of gallic acid and the yield of the non-polymer catechins.

In addition, the concentration of gallic acid in the tea extract used in the present invention ranges preferably from 0.05 to 1 mass%, more preferably from 0.1 to 1 mass, more preferably from 0.2 to 0.8 mass%, more preferably from 0.3 to 0.7 mass%, even more preferably from 0.4 to 0.6 mass%.

Further, the mass ratio of gallic acid/non-polymer catechins in the tea extract used in the present invention ranges preferably from 0.01 to 1, more preferably from 0.03 to 0.7, more preferably from 0.05 to 0.5, even more preferably from 0.07 to 0.3.

The OH-type anion exchange resin used in the present invention has a hydroxide ion as a counterion.
The resin base, base structure, and form of the OH-type anion exchange resin are not particularly limited, and may be appropriately selected and used.
Examples of the resin base include resin bases formed of a styrene-based compound such as styrene-divinylbenzene and a (meth)acrylic acid-based compound. The term "(meth)acrylic acid" as used herein refers to a concept including acrylic acid and methacrylic acid. Of those, the resin base formed of a styrene-based compound is preferred from the viewpoints of the efficiencyof removal of gallic acid and the yield of the non-polymer catechins, in the case of using water as a solvent for the tea extract.
In addition, examples of the base structure include a gel-type base structure and a porous-type base structure. The term "gel-type base structure" as used herein refers to a base structure having only micropores which are fine pores formed by swelling, while the term "porous-type base structure" refers to a base structure having not only micropores but also macropores which are physical fine pores and do not disappear even in a dry state. Of those, the gel-type base structure is preferred from the viewpoints of the efficiency of removal of gallic acid and the yield of the non-polymer catechins.
Examples of the form of the OH-type anion exchange resin include powdery, spherical, fibrous, and filmy forms.

The OH-type anion exchange resin may be strongly basic resin or weakly basic. Of those, from the viewpoints of the efficiency of removal of gallic acid and the yield of the non-polymer catechins, in the case of using water as a solvent for the tea extract, the resin is preferably strongly basic, while in the case of using an organic solvent as a solvent for the tea extract, the resin is preferably weakly basic.

In addition, the ion exchange capacity of the OH-type anion exchange resin is not particularly limited, but from the viewpoints of the efficiency of removal of gallic acid and taste and flavor, the ion exchange capacity ranges preferably from 0.5 to 4.0 meq/mL, more preferably from 0. 8 to 2.5 meq/mL, more preferably from 1.0 to 2.0 meq/mL, more preferably from 1.2 to 1.6 meq/mL, even more preferably from 1.2 to 1.5 meq/mL. The term "ion exchange capacity" as used herein refers to an amount of exchangeable ions (milliequivalent) per mL of ion exchange resin, and the amount can be measured in conformity to, for example, "Technology and application of ion exchange resin (basic edition), edited by ORGANO CORPORATION, 1997, revised 2nd edition, p. 155-181."

The OH-type anion exchange resin used in the present invention may be one produced by a known method or a commercially available product. Asa commercially available weakly basic OH-type anion exchange resin, there are given, for example: DIAION WA10 and WA30 (both of which are manufactured by Mitsubishi Chemical Corporation); DUOLITE A375LF andA-7 (both of which are manufactured by Sumitomo Chemical Co., Ltd.); and Amberlite IRA67 and IRA96SB (both of which are manufactured by ORGANO CORPORATION).
In addition, as a strongly basic OH-type anion exchange resin, there are given, for example, regeneration-type resins such as: DIAION SA10A and SA20A (both of which are manufactured by Mitsubishi Chemical Corporation); and Amberlite IRA400J, IRA402BL, and IRA404J (all of which are manufactured by ORGANO CORPORATION).

It should be noted that the OH-type anion exchange resin may be produced by exchanging counterions of the anion exchange resin for hydroxide ions. Specifically, there is given a method comprising bringing a Cl-type anion exchange resin into contact with an aqueous sodium hydroxide solution at least once. The concentration of sodium hydroxide in the aqueous sodium hydroxide solution ranges preferably from 0.1 to 15 mass%, more preferably from 1 to 10 mass%. In addition, the amount of the aqueous sodium hydroxide solution when contacting it with the anion exchange resin ranges preferably from 2 to 100 times, more preferably from 4 to 40 times the total mass of the anion exchange resin. After the contact with the aqueous sodium hydroxide solution, the resin is preferably washed with water in an amount of from 5 to 50 times the total mass of the anion exchange resin. It should be noted that examples of the Cl type anion exchange resin include: DIAION SA10A and SA20A (both of which are manufactured by Mitsubishi Chemical Corporation); and Amberlite IRA400J, IRA402BL, and IRA404J (all of which are manufactured by ORGANO CORPORATION).

From the viewpoints of the efficiency of removal of gallic acid and the yield of the non-polymer catechins, the amount of the OH-type anion exchange resin used ranges preferably from 0.5 to 10 times by mole, more preferably from 0.8 to 6 times by mole, more preferably from 1 to 5 times by mole, even more preferably from 1.1 to 4 times by mole the amount of gallic acid in the tea extract solution in terms of the exchange capacity of the anion exchange resin. In addition, the volume of the OH-type anion exchange resin used ranges preferably from 0.01 to 1 times, more preferably from 0.0125 to 0.1 times, even more preferably 0.02 to 0.05 times the volume of the tea extract.

On the other hand, the H-type cation exchange resin used in the present invention has a hydrogen ion as a counterion. In the present invention, use of the OH-type anion exchange resin in combination with the H-type cation exchange resin can suppress an increase in pH due to a hydroxide ion desorbed from the OH-type anion exchange resin and can suppress coarseness of the tea extract.
The H-type cation exchange resin may be a strongly acidic H-type cation exchange resin or a weakly acidic H-type cation exchange resin. Of those, the strongly acidic H-type cation exchange resin is preferred from the viewpoint of performing a treatment in a larger bed volume. In addition, the ion exchange capacity of the H-type cation exchange resin is not particularly limited, but ranges preferably from 0.5 to 4.0 meq/mL, more preferably from 1 to 3 meq/mL, even more preferably from 1.5 to 2.5 meq/mL from the viewpoint of taste and flavor.

The amount of the H-type cation exchange resin used may be appropriately adjusted, depending on the chemical type of the H-type cation exchange resin. For example, in the case of using a strongly acidic H-type cation exchange resin, the amount ranges preferably from 10 to 120%, more preferably from 20 to 100%, more preferably from 30 to 80%, even more preferably from 40 to 70% relative to the ion exchange capacity of the OH-type anion exchange resin. On the other hand, in the case of using a weakly acidic H-type cation exchange resin, the amount ranges preferably from 50 to 300%, more preferably from 100 to 250%, even more preferably from 120 to 200% relative to the ion exchange capacity of the OH-type anion exchange resin.

The contact of the tea extract with the OH-type anion exchange resin and the H-type cation exchange resin may be carried out by employing a batch mode involving adding the ion exchange resins to the tea extract, stirring the mixture for adsorption, and collecting the ion exchange resins by filtration, or by employing a column mode involving allowing the tea extract to flow through a column filled with the ion exchange resins to continuously perform an adsorption treatment, and the like.
In the case of employing the batch mode, as the contact method, the tea extract may be brought into contact with a mixture of the OH-type anion exchange resin and the H-type cation exchange resin or may be brought into contact with the OH-type anion exchange resin and the H-type cation exchange resin in any order. On the other hand, in the case of employing the column mode, the tea extract may be brought into contact with the mixture of the OH-type anion exchange resin and the H-type cation exchange resin filled into one column or may be brought into contact with the OH-type anion exchange resin and the H-type cation exchange resin separately filled into different columns in any order. In addition, the tea extract may be brought into contact with the OH-type anion exchange resin and the H-type cation exchange resin separately filled into different columns connected in series.

In the case of using the weakly basic OH-type anion exchange resin as the anion exchange resin, the tea extract may be brought into contact with a mixture of the OH-type anion exchange resin and the H-type cation exchange resin or may be brought into contact with the OH-type anion exchange resin and the H-type cation exchange resin in any order.
On the other hand, also in the case of using the strongly basic OH-type anion exchange resin as the anion exchange resin, the same contact method as that used for the weaklybasic OH-type anion exchange resin may be employed. However, from the viewpoint of the yield of the non-polymer catechins, the tea extract is preferably brought into contact with a mixture of the OH-type anion exchange resin and the H-type cation exchange resin or is preferably brought into contact with the H-type cation exchange resin and subsequently with the OH-type anion exchange resin.

The contact time may be appropriately selected, depending on a production scale or the like, but ranges preferably from 0.5 to 10 hours, more preferably from 1 to 5 hours.

In addition, the contact with the OH-type anion exchange resin and the contact with the H-type cation exchange resin are preferably carried out continuously without another operation therebetween. This can further improve stability of the purified tea extract and can allow the tea extract solution to flow in a large amount to improve productivity.
With regard to flow conditions for the tea extract, from the view points of production efficiency and suppression of deterioration of the taste and flavor due to a change in pH, the superficial velocity (SV) ranges preferably from 1 to 60/hr, more preferably from 3 to 30/hr, even more preferably from 5 to 15/hr based on the volume of the OH-type anion exchange resin.

In addition, the tea extract is brought into contact with the OH-type anion exchange resin and the H-type cation exchange resin at a temperature of preferably from 0 to 40°C, more preferably from 10 to 35°C, even more preferably from 20 to 30°C.

After the contact treatment, the treated solution may be used as it is, but if necessary, removal of the solvent and/or addition of water may be carried out. Further, precipitates formed by the removal of the solvent and/or addition of water may be removed by solid-liquid separation. This can further improve the taste and flavor and stability of the purified tea extract. It should be noted that as an operation for the solid-liquid separation, amethodusually used in food industries may be employed. Examples thereof include filtration and centrifugation treatments and the like, and the treatments may be carried out in combination.

Thus, the purified tea extract of the present invention is obtained, and the non-polymer catechins can be collected in a yield of preferably 70% or more, more preferably 80% or more, even more preferably 90% or more based on the tea extract.

The product form of the purified tea extract of the present invention may be a liquid or a solid. In the case where the form is desirably a solid, the purified tea extract may be powderized by a known method such as spray-drying or freeze-drying.

The purified tea extract of the present invention can have an improved colorcolor.
The color (OD450) of the purified tea extract is preferably 0.3 or less, more preferably 0.28 or less, even more preferably 0.25 or less. The term "color (OD450)" as used herein refers to an absorbance at 450 nm of a solution obtained by diluting the purified tea extract with ion-exchange water so that the concentration of the non-polymer catechins is 175 mg/100 mL, measured with an absorption spectrometer.

In addition, the purified green tea extract of the present invention has the suppressed sourness derived from gallic acid and has the taste and flavor inherent to the tea. Therefore, the purified green tea extract can be used in wide applications. For example, the purified green tea extract of the present invention may be used as a raw material for foods and beverages as it is or after concentration or addition of water.

With regard to the above-mentioned embodiments, the present invention discloses the following production methods.
[1] A production method for a purified tea extract, comprising bringing a tea extract into contact with an OH-type anion exchange resin and an H-type cation exchange resin.
[2] The production method for a purified tea extract according to the above-mentioned item [1], in which the tea extract is brought into contact with a mixture of the OH-type anion exchange resin and the H-type cation exchange resin.
[3] The production method for a purified tea extract according to the above-mentioned item [1], in which the tea extract is brought into contact with the H-type cation exchange resin, and subsequently brought into contact with the OH-type anion exchange resin.
[4] The production method for a purified tea extract according to the above-mentioned item [1], in which the tea extract is brought into contact with the OH-type anion exchange resin, and subsequently brought into contact with the H-type cation exchange resin.
[5] The production method for a purified tea extract according to any one of the above-mentioned items [1] to [4], in which the OH-type anion exchange resin isa weakly basic OH-type anion exchange resin.
[6] The production method for a purified tea extract according to any one of the above-mentioned items [1] to [3], in which the OH-type anion exchange resin isa stronglybasic OH-type anion exchange resin.
[7] The production method for a purified tea extract according to any one of the above-mentioned items [1] to [6], in which the OH-type anion exchange resin has a gel-type base structure.
[8] The production method for a purified tea extract according to any one of the above-mentioned items [1] to [7], in which the tea extract is a tannase-treated tea extract.
[9] The production method for a purified tea extract according to any one of the above-mentioned items [1] to [8], in which the tea extract contains an organic solvent as a solvent.
[10] The production method for a purified tea extract according to the above-mentioned item [9], in which the organic solvent has a form of an organic solvent aqueous solution, and the concentration of the organic solvent in the organic solvent aqueous solution ranges preferably from 10 to 95 mass%, more preferably from 30 to 90 mass%, more preferably from 50 to 85 mass%, more preferably from 50 to 80 mass%, more preferably from 50 to 75 mass%, even more preferably from 50 to 70 mass%.
[11] The production method for a purified tea extract according to any one of the above-mentioned items [1] to [8], in which the solvent for the tea extract iswater.
[12] The production method for a purified tea extract according to any one of the above-mentioned items [8] to [11], in which the ratio of gallate forms in the tea extract ranges preferably from 5 to 60 mass%, more preferably from 10 to 50 mass%, more preferably from 20 to 40 mass%, even more preferably from 25 to 40 mass%.
[13] The production method for a purified tea extract according to any one of the above-mentioned items [1] to [12], in which the concentration of the non-polymer catechins in the tea extract ranges preferably from 0.1 to 15 mass%, more preferably from 0.5 to 10 mass%, more preferably from 0.8 to 5 mass%, even more preferably from 1 to 5 mass%.
[14] The production method for a purified tea extract according to any one of the above-mentioned items [1] to [13], in which the concentration of gallic acid in the tea extract ranges preferably from 0.05 to 1 mass%, more preferably from 0.1 to 1 mass%, more preferably from 0.2 to 0.8 mass%, more preferably from 0.3 to 0.7 mass, even more preferably from 0.4 to 0.6 mass%.
[15] The production method for a purified tea extract according to any one of the above-mentioned items [1] to [14], in which the mass ratio of gallic acid/non-polymer catechins in the tea extract ranges preferably from 0.01 to 1, more preferably from 0.03 to 0.7, more preferably from 0.05 to 0.5, even more preferably from 0.07 to 0.3.
[16] The production method for a purified tea extract according to any one of the above-mentioned items [1] to [8] and [11] to [15], in which the OH-type anion exchange resin has a resin base formed of a styrene-based compound, preferably styrene-divinylbenzene.
[17] The production method for a purified tea extract according to any one of the above-mentioned items [1] to [15], in which the OH-type anion exchange resin has a resinbase formed of a (meth) acrylic acid-based compound.
[18] The production method for a purified tea extract according to any one of the above-mentioned items [1] to [17], in which the OH-type anion exchange resin has an ion exchange capacity of preferably from 0.5 to 4.0 meq/mL, more preferably from 0.8 to 2.5 meq/mL, more preferably from 1.0 to 2.0 meq/mL, more preferably from 1.2 to 1. 6 meq/mL, even more preferably from 1.2 to 1. 5 meq/mL.
[19] The production method for a purified tea extract according to any one of the above-mentioned items [1] to [18], in which the amount of the OH-type anion exchange resin used ranges preferably from 0.5 to 10 times by mole, more preferably from 0.8 to 6 times by mole, more preferably from 1 to 5 times by mole, even more preferably from 1.1 to 4 times by mole the amount of gallic acid in the tea extract solution in terms of the exchange capacity of the anion exchange resin.
[20] The production method for a purified tea extract according to any one of the above-mentioned items [1] to [19], in which the volume of the OH-type anion exchange resin used ranges preferably from 0.01 to 1 times, more preferably from 0.0125 to 0.1 times, even more preferably from 0.02 to 0.05 times the volume of the tea extract.
[21] The production method for a purified tea extract according to any one of the above-mentioned items [1] to [20], in which the H-type cation exchange resin has an ion exchange capacity of preferably from 0.5 to 4.0 meq/mL, more preferably from 1 to 3 meq/mL, even more preferably from 1.5 to 2.5 meq/mL.
[22] The production method for a purified tea extract according to any one of the above-mentioned items [1] to [21], in which in the case where the H-type cation exchange resin is strongly acidic, the amount of the resin used ranges preferably from 10 to 120%, more preferably from 20 to 100%, more preferably from 30 to 80%, even more preferably from 40 to 70% relative to the ion exchange capacity of the OH-type anion exchange resin.
[23] The production method for a purified tea extract according to any one of the above-mentioned items [1] to [21], in which in the case where the H-type cation exchange resin is weakly acidic, the amount of the resin used ranges preferably from 50 to 300%, more preferably from 100 to 250%, even more preferably from 120 to 200% relative to the ion exchange capacity of the OH-type anion exchange resin.
[24] The production method for a purified tea extract according to any one of the above-mentioned items [1] to [23], in which the time for contact with the tea extract ranges preferably from 0.5 to 10 hours, more preferably from 1 to 5 hours.
[25] The production method for a purified tea extract according to any one of the above-mentioned items [1] to [24], in which in the case where the tea extract is brought into contact with the resins in a column mode, as a flow condition for the tea extract, a superficial velocity (SV) based on the volume of the OH-type anion exchange resin ranges preferably from 1 to 60/hr, more preferably from 3 to 30/hr, even more preferably from 5 to 15/hr.
[26] The production method for a purified tea extract according to any one of the above-mentioned items [1] to [25], in which the tea extract is brought into contact with the OH-type anion exchange resin and the H-type cation exchange resin at a temperature of preferably from 0 to 40°C, more preferably from 10 to 35°C, even more preferably from 20 to 30°C.
[27] The production method for a purified tea extract according to any one of the above-mentioned items [1] to [26], in which the yield of the non-polymer catechins is preferably 70% or more, more preferably 80% or more, even more preferably 90% or more based on the tea extract.
[28] The production method for a purified tea extract according to any one of the above-mentioned items [1] to [27], in which the purified tea extract has a color (OD450) of 0.3 or less, more preferably 0.28 or less, even more preferably 0.25 or less.

### Examples

### (1) Measurement of the non-polymer catechins and gallic acid

Purified tea extracts obtained in Examples and Comparative Examples were filtered with a filter (0.45 µm) and analyzed by a gradient method using a high-performance liquid chromatograph (type SCL-10AVP, manufactured by Shimadzu Corporation) equipped with an octadecyl group-introduced packed column for liquid chromatography (L-column TM ODS, 4.6 mmϕ×250 mm: manufactured by Chemicals Evaluation and Research Institute, Japan) at a column temperature of 35°C. Determination was carried out by a calibration curve method using standards of catechins manufactured by Mitsui Norin Co., Ltd. The determination was carriedout under conditions of using a solution of 0.1 mol/L acetic acid in distilled water as a mobile phase solution A and a solution of 0.1 mol/L acetic acid in acetonitrile as a mobile phase solution B at a sample injection volume of 20 µL and a UV detector wavelength of 280 nm.

### (2) Measurement of color (OD450)

The purified tea extracts obtained in Examples and Comparative Examples were diluted with ion-exchange water so that the concentration of the non-polymer catechins was 175 mg/100 mL, and absorbance at 450 nm was measured with an absorption spectrometer at 20°C using a quartz cell having an optical path length of 1 cm.

### (3) Calculation of gallic acid removal ratio

The mass of gallic acid when the mass of the non-polymer catechins in the whole treated solution collected at the column outlet reached 70% relative to the mass of the non-polymer catechins in the tea extract before flowing of the extract through the column (hereinafter referred to as "at the time of a yield of the non-polymer catechins of 70%") was calculated. The gallic acid residual ratio (%) was calculated by dividing the mass of gallic acid at the time of a yield of the non-polymer catechins of 70% by the mass of gallic acid in the tea extract before flowing of the extract through the column, and multiplying the resultant value by 100. The gallic acid removal ratio (%) was calculated by subtracting the resulting gallic acid residual ratio from 100.

### (4) Sensory evaluation

The purified tea extracts obtained in Examples and Comparative Examples were diluted with ion-exchange water so that the concentration of the non-polymer catechins was 175 mg/100 mL, and evaluated on the taste and flavor. The taste and flavor were evaluated by five panelists through discussion to determine their score. The taste and flavor were evaluated on sourness and coarseness based on the following criteria. As the value of the score becomes larger, its taste and flavor become better.

### (Evaluation criteria of sourness)

Score 3: Having no sourness
Score 2: Having slight sourness
Score 1: Having strong sourness

### (Evaluation criteria of coarseness)

Score 4: Having very slight coarseness
Score 3: Having slight coarseness
Score 2: Having coarseness
Score 1: Having great coarseness

### Production Example 1

### Production of tea extract 1

200 g of a dry powder of green tea extract which had been subjected to a tannase treatment in advance (concentration of the non-polymer catechins: 30 mass%, ratio of gallate forms in the non-polymer catechins: 32 mass%, concentration of gallic acid: 3.7 mass) was dissolved in 6,000 g of ion-exchange water by stirring at 25°C for 30 minutes, thereby preparing a tea extract 1. The analysis results of the tea extract 1 are as follows.

The content of the non-polymer catechins in the tea extract 1=0.96 mass%
The content of gallic acid in the tea extract 1=0.119 mass%
The ratio of gallate forms in the tea extract 1=32 mass%
The mass ratio of gallic acid/non-polymer catechins in the tea extract 1=0.123

### Production Example 2

### Production of tea extract 2

130 g of a dry powder of green tea extract which had been subjected to a tannase treatment in advance (concentration of the non-polymer catechins: 30 mass%, ratio of gallate forms in the non-polymer catechins: 32 mass%, concentration of gallic acid: 3.7 mass) was dissolved in 870 g of ion-exchange water by stirring at 25°C for 15 minutes, thereby preparing a tea extract 2. The analysis results of the tea extract 2 are as follows.

The content of the non-polymer catechins in the tea extract 2=3.90 mass%
The content of gallic acid in the tea extract 2=0.481 mass%
The ratio of gallate forms in the tea extract 2=32.0 mass%
The mass ratio of gallic acid/non-polymer catechins in the tea extract 2=0.123

### Production Example 3

### Production of tea extract 3

100 g of acid clay (MIZUKA ACE #600, manufactured by MIZUSAWA INDUSTRIAL CHEMICALS, LTD.) was added to 800 g of a 92.4 mass% aqueous solution of ethanol under a stirring condition of 250 r/min, and the mixture was stirred for about 10 minutes. Next, 200 g of a dry powder of green tea extract that had been subjected to a tannase treatment in advance (concentration the non-polymer catechins: 30 mass, ratio of gallate forms in the non-polymer catechins: 32 mass%, concentration of gallic acid: 3.7 mass%) was added thereto, and the mixture was stirred for an additional 6 hours while being kept at room temperature (pH 5.0). After that, the resultant precipitates were removed by filtration using #2 filter paper, thereby obtaining 840 g of a filtrate. 405 g of ion-exchange water were added to the filtrate, and turbid components precipitated at an operation temperature of 25°C were separated (6,000 rpm, 15 minutes), thereby preparing a tea extract 3. The analysis results of the tea extract 3 are as follows.

The content of the non-polymer catechins in the tea extract 3=3.90 mass%
The content of gallic acid in the tea extract 3=0.445 mass%
The ratio of gallate forms in the tea extract 3=31.3 mass%
The mass ratio of gallic acid/non-polymer catechins in the tea extract 3=0.114

Commercially available ion exchange resins were pretreated or prepared as below, and ware used.

### (1) Strongly basic OH-type anion exchange resin "SA10A(OH)"

A column having an inner diameter of 2.2 cm was filled with 120 mL of a strongly basic Cl-type anion exchange resin (DIAION SA10A, ion exchange capacity: 1.3meq/mL, manufactured by Mitsubishi Chemical Corporation). After that, ion-exchange water at 60°C was allowed to flow under conditions of SV=10 (h⁻¹) and a bed volume of BV=200 (v/v) relative to the volume of the ion exchange resin filled, to wash the resin. Further, a 2 mol/L aqueous solution of NaOH was allowed to flow under conditions of SV=4 (h⁻¹) and a bed volume of BV=18 (v/v) relative to the volume of the ion exchange resin filled, to form an OH-type resin. After that, ion-exchange water at 25°C was allowed to flow under conditions of SV=10 (h⁻¹) and a bed volume of BV=40 (v/v) relative to the volume of the ion exchange resin filled, to produce a strongly basic OH-type anion exchange resin. The resin is hereinafter referred to as "SA10A (OH)."

### (2) Weakly basic OH-type anion exchange resin "WA10 (OH) "

A column having an inner diameter of 2.2 cm was filled with 100 mL of a weakly basic OH-type anion exchange resin (DIAION WA10, ion exchange capacity: 1.2 meq/mL, manufactured by Mitsubishi Chemical Corporation). After that, ion-exchange water at 50°C was allowed to flow under conditions of SV=10 (h⁻¹) and a bed volume of BV=40 (v/v) relative to the volume of the ion exchange resin filled, to wash the resin. The resin is hereinafter referred to as "WA10 (OH)."

### (3) Weakly basic OH-type anion exchange resin "WA30(OH)"

A column having an inner diameter of 2.2 cm was filled with 100 mL of a weakly basic OH-type anion exchange resin (DIAION WA30, ion exchange capacity: 1.5 meq/mL, manufactured by Mitsubishi Chemical Corporation). After that, ion-exchange water at 50°C was allowed to flow under conditions of SV=10 (h⁻¹) and a bed volume of BV=40 (v/v) relative to the volume of the ion exchange resin filled, to wash the resin. The resin is hereinafter referred to as "WA30 (OH)."

### (4) Weakly basic ascorbic acid-type anion exchange resin "WA10(ascorbic acid)"

106 g of a weakly basic OH-type anion exchange resin (DIAION WA10, ion exchange capacity: 1.2 meq/mL, manufactured by Mitsubishi Chemical Corporation) was taken, and mixed with 1,200 g of a 5.0 mass% aqueous solution of ascorbic acid by stirring for 75 minutes. Subsequently, the weakly basic ion exchange resin was collected by filtration, and then mixing with 1, 200 g of the 5.0 mass% aqueous solution of ascorbic acid by stirring for 75 minutes was repeated three times, thereby producing a weakly basic ion exchange resin having an anion group derived from ascorbic acid (weakly basic ascorbic acid-type anion exchange resin). After that, the weakly basic ascorbic acid-type anion exchange resin was washed with 1, 200 g of water three times. The resin is hereinafter referred to as "WA10(ascorbic acid)."

### (5) Strongly acidic H-type cation exchange resin "SK1BH"

A column having an inner diameter of 2.2 cm was filled with 100 mL of a strongly acidic H-type cation exchange resin (DIAION SK1BH, ion exchange capacity: 2.0 meq/mL, manufactured by Mitsubishi Chemical Corporation). After that, ion-exchange water at 80°C was allowed to flow under conditions of SV=10 (h⁻¹) and BV=100 (v/v), to wash the resin. The resin is hereinafter referred to as "SK1BH."

### (6) Weakly acidic H-type cation exchange resin "WK40L"

A column having an inner diameter of 2.2 cm was filled with 120 mL of a weakly acidic H-type cation exchange resin (DIAION WK40L, ion exchange capacity: 4.4 meq/mL, manufactured by Mitsubishi Chemical Corporation). After that, ion-exchange water at 80°C was allowed to flow under conditions of SV=10 (h⁻¹) and BV=100 (v/v), to wash the resin. The resin is hereinafter referred to as "WK40L. "

### Example 1

A column having an inner diameter of 2.2 cm was filled with 16 mL of the strongly acidic H-type cation exchange resin "SK1BH." Subsequently, a column having an inner diameter of 2.2 cm was filled with 40 mL of the strongly basic OH-type anion exchange resin "SA10A(OH)" .
Subsequently, the tea extract 1 was allowed to flow through the columns in an order of the cation exchange resin and the anion exchange resin. It shouldbe noted that the flowing of the tea extract was carried out under a condition of SV=7.5 (h⁻¹) relative to the anion exchange resin. The flowing of the extract was stopped when the mass ratio of gallic acid/non-polymer catechins in the whole treated solution collected at the column outlet reached 0.044.
Table 1 shows production conditions of Example 1 and analysis values of the purified tea extract. In addition, the gallic acid removal ratio at the time of a yield of the non-polymer catechins of 70% was 98%. The flowing of the tea extract through the columns was carried out at 25°C (the same applies in Examples and Comparative Examples below).

### Example 2

A column having an inner diameter of 2.2 cm was filled with 20 mL of the weakly acidic H-type cation exchange resin "WK40L." Subsequently, a column having an inner diameter of 2.2 cm was filled with 40 mL of the strongly basic OH-type anion exchange resin "SA10A(OH)" .
Subsequently, the tea extract 1 was allowed to flow through the columns in an order of the cation exchange resin and the anion exchange resin. It shouldbe noted that the flowing of the tea extract was carried out under a condition of SV=10 (h⁻¹) relative to the anion exchange resin. The flowing of the extract was stopped when the mass ratio of gallic acid/non-polymer catechins in the whole treated solution collected at the column outlet reached 0.044.
Table 1 shows production conditions of Example 2 and analysis values of the purified tea extract. In addition, the gallic acid removal ratio at the time of a yield of the non-polymer catechins of 70% was 82%.

### Example 3

12.8 mL of the strongly acidic H-type cation exchange resin "SK1BH" and 40 mL of the strongly basic OH-type anion exchange resin "SA10A(OH)" were mixed, and a column having an inner diameter of 2.2 cm was filled with the mixture.
The tea extract 1 was allowed to flow under a condition of SV=10 (h⁻¹) relative to the anion exchange resin, and the flowing of the extract was stopped when the mass ratio of gallic acid/non-polymer catechins in the whole treated solution collected at the column outlet reached 0.044.
Table 1 shows production conditions of Example 3 and analysis values of the purified tea extract. In addition, the gallic acid removal ratio at the time of a yield of the non-polymer catechins of 70% was 90%.

### Example 4

20 mL of the weakly acidic H-type cation exchange resin "WK40L" and 40 mL of the strongly basic OH-type anion exchange resin "SA10A(OH)" were mixed, and a column having an inner diameter of 2.2 cm was filled with the mixture.
The tea extract 1 was allowed to flow under a condition of SV=7.5 (h⁻¹) relative to the anion exchange resin, and the flowing of the extract was stopped when the mass ratio of gallic acid/non-polymer catechins in the whole treated solution collected at the column outlet reached 0.044.
Table 1 shows production conditions of Example 4 and analysis values of the purified tea extract. In addition, the gallic acid removal ratio at the time of a yield of the non-polymer catechins of 70% was 97%.

### Comparative Example 1

A column having an inner diameter of 2.2 cm was filled with 40 mL of the strongly basic OH-type anion exchange resin "SA10A (OH)".
The tea extract 1 was allowed to flow under a condition of SV=10 (h⁻¹) relative to the anion exchange resin, and the flowing of the extract was stopped when the mass ratio of gallic acid/non-polymer catechins in the whole treated solution collected at the column outlet reached 0.044. Table 1 shows production conditions of Comparative Example 1 and analysis values of the purified tea extract. In addition, the gallic acid removal ratio at the time of a yield of the non-polymer catechins of 70% was 58%.

**[Table 1]**

| | | | Example 1 | Example 2 | Example 3 | Example 4 | Comparative Example 1 |
|---|---|---|---|---|---|---|---|
| Anion exchange resin | Resin | | SA10A (OH) | SA10A (OH) | SA10A (OH) | SA10A (OH) | SA10A (OH) |
| | Chemical property | - | Strongly basic | Strongly basic | Strongly basic | Strongly basic | Strongly basic |
| | Base | - | Styrene-based | Styrene-based | Styrene-based | Styrene-based | Styrene-based |
| | Structure | - | Gel-type | Gel-type | Gel-type | Gel-type | Gel-type |
| | Ion exchange capacity | [meq/ml] | 1.3 | 1.3 | 1.3 | 1.3 | 1.3 |
| | Counterion group | - | OH-type | OH-type | OH-type | OH-type | OH-type |
| Cation exchange resin | Resin | | SK1BH | WK40L | SK1BH | WK40L | - |
| | Chemical property | - | Strongly acidic | Weakly acidic | Strongly acidic | Weakly acidic | - |
| | Ion exchange capacity | [meq/ml] | 2.0 | 4.4 | 2.0 | 4.4 | - |
| | Counterion group | - | H-type | H-type | H-type | H-type | - |
| | Amount used¹⁾ | [%] | 62% | 169% | 49% | 169% | - |
| Flow conditions | Tea extract | | Tea extract 1 | Tea extract 1 | Tea extract 1 | Tea extract 1 | Tea extract 1 |
| | Order | | H-type→OH-type | H-type→OH-type | Mixture | Mixture | - |
| | Solvent | | Water | Water | Water | Water | Water |
| Analysis value | Value at the time of yield of the non-polymer catechins of 70% | | | | | | |
| | Gallic acid removal ratio | [%] | 98 | 82 | 90 | 97 | 58 |
| Analysis values | Value at the time of mass ratio of gallic acid/non-polymer catechins=0.044 | | | | | | |
| | pH of treated solution | - | 4.9 | 5.4 | 5.1 | 5.1 | 8.4 |
| | BV | - | 108 | 70 | 91 | 64 | 7 |
| | Yield of the non-polymer catechins | [%] | 95 | 86 | 93 | 95 | 49 |
| | Color of treated solution (OD450) | | 0.575 | 0.722 | 0.646 | 0.690 | 1.912 |
| | Sourness | | 3 | 3 | 3 | 3 | 3 |
| | Coarseness | | 3 | 2 | 4 | 4 | 1 |

| | | | | | | | |
|---|---|---|---|---|---|---|---|
| 1) Percentage of ion exchange capacity of cation exchange resin relative to ion exchange capacity of anion exchange resin | | | | | | | |

Table 1 shows specific examples of purification of the tea extract using water as a solvent. In the production methods of Examples, the gallic acid removal ratios at the time of a yield of the non-polymer catechins of 70% were excellent compared with the production method of Comparative Example. In addition, in the case where the flowing of the extract was carried out until the mass ratio of gallic acid/non-polymer catechins=0.044 was achieved, the bed volume (BV) was large, which enabled a treatment of a large amount of the tea extract. In addition, the yield of the non-polymer catechins was high. The purified tea extracts obtained by the production methods of Examples had a pH controlled to a weakly acidic region, and significantly improved coarseness compared with Comparative Example, and were excellent in color.

### Example 5

15 mL of the weakly acidic OH-type anion exchange resin "WA10 (OH) " and 3 mL of the strongly acidic H-type cation exchange resin "SK1BH" (corresponding to 33% capacity relative to the exchange capacity of the anion exchange resin) were mixed, and a column having an inner diameter of 2.2 cm was filled with the mixture.
Next, the tea extract 2 was allowed to flow under a condition of SV=9 (h⁻¹) relative to the amount of the anion exchange resin, and the flowing of the extract was stopped when the mass ratio of gallic acid/non-polymer catechins in the whole treated solution collected at the column outlet reached 0.044. The bed volume was 20 times as large as the volume of the anion exchange resin (BV=20 (v/v)).
Table 2 shows production conditions of Example 5, and analysis values and evaluation results of the purified green tea extract.

### Example 6

A column having an inner diameter of 2.2 cm was filled with 9 mL of the strongly acidic H-type cation exchange resin "SK1BH" (corresponding to 100% capacity relative to the exchange capacity of the anion exchange resin). Subsequently, another column having an inner diameter of 2.2 cm was filled with 15 mL of the weakly basic OH-type anion exchange resin "WA10 (OH)".
Subsequently, the tea extract 2 was allowed to flow through the columns in an order of the anion exchange resin and the cation exchange resin. It should be noted that the flowing of the tea extract was carried out under a condition of SV=9 (h⁻¹) relative to the amount of the anion exchange resin. The flowing of the extract was stopped when the mass ratio of gallic acid/non-polymer catechins in the whole treated solution collected at the column outlet reached 0.044. The bed volume was 24 times as large as the volume of the anion exchange resin (BV=24 (v/v)).
Table 2 shows production conditions of Example 6, and analysis values and evaluation results of the purified green tea extract.

### Comparative Example 2

A column having an inner diameter of 2.2 cm was filled with 15 mL of the weakly basic ascorbic acid-type anion exchange resin "WA10 (ascorbic acid-type)", and the tea extract 2 was allowed to flow under a condition of SV=9 (h-¹).
The flowing of the extract was stopped when the mass ratio of gallic acid/non-polymer catechins in the whole treated solution collected at the column outlet reached 0.044. The bed volume was 12 times as large as the volume of the anion exchange resin (BV=20 (v/v)).
Table 2 shows production conditions of Comparative Example 2, and analysis values and evaluation results of the purified green tea extract.

### Comparative Example 3

A column having an inner diameter of 2.2 cm was filled with 15 mL of the weakly basic OH-type anion exchange resin "WA10 (OH)", and the tea extract 2 was allowed to flow under a condition of SV=9 (h⁻¹). The flowing of the extract was stopped when the mass ratio of gallic acid/non-polymer catechins in the whole treated solution collected at the column outlet reached 0.044.
Table 2 shows production conditions of Comparative Example 3 , and analysis values and evaluation results of the purified green tea extract.

**[Table 2]**

| | | | Example 5 | Example 6 | Comparative Example 2 | Comparative Example 3 |
|---|---|---|---|---|---|---|
| Anion exchange resin | Resin | | WA10 (OH) | WA10 (OH) | WA10 (ascorbic acid) | WA10 (OH) |
| | Chemical property | - | Weakly basic | Weakly basic | Weakly basic | Weakly basic |
| | Base | - | Acrylic | Acrylic | Acrylic | Acrylic |
| | Structure | | Gel-type | Gel-type | Gel-type | Gel-type |
| | Ion exchange capacity | [meq/ml] | 1.2 | 1.2 | 1.2 | 1.2 |
| | Counterion group | - | OH-type | OH-type | Ascorbic acid-type | OH-type |
| Cation exchange resin | Resin | | SK1BH | SK1BH | - | - |
| | Chemical property | - | Strongly acidic | Strongly acidic | - | - |
| | Ion exchange capacity | [meq/ml] | 2.0 | 2.0 | - | - |
| | Counterion group | - | H-type | H-type | - | - |
| | Amount used¹⁾ | [%] | 33% | 100% | - | - |
| Flow conditions | Tea extract | | Tea extract 2 | Tea extract 2 | Tea extract 2 | Tea extract 2 |
| | Order | | Mixture | OH-type → H-type | | - |
| | Solvent | | Water | Water | Water | Water |
| Analysis values | Value at the time of mass ratio of gallic acid/non-polymer catechins=0.044 | | | | | |
| | pH of treated solution | - | 5.3 | 3.8 | 5.0 | 7.3 |
| | BV | - | 20 | 24 | 12 | 24 |
| | Yield of the non-polymer catechins | [%] | 74 | 77 | 79 | 77 |
| | Color of treated solution (OD450) | | 0.285 | 0.236 | 0.233 | 0.511 |
| | Sourness | | 3 | 3 | 2 | 3 |
| | Coarseness | | 3 | 4 | 2 | 1 |

| | | | | | | |
|---|---|---|---|---|---|---|
| 1) Percentage of ion exchange capacity of cation exchange resin relative to ion exchange capacity of anion exchange resin | | | | | | |

Table 2 shows specific examples of purification of the tea extract using water as a solvent. In all the production methods of Examples, the pH was controlled to a weakly acidic region, and the taste and flavor of the non-polymer catechins were excellent compared with the production methods of Comparative Examples. On the other hand, the tea extracts treated with only the anion exchange resin (Comparative Examples 2 and 3) were inferior in coarseness.

### Example 7

8 mL of the weaklybasic OH-type anion exchange resin "WA10 (OH) " (having an ion exchange capacity of 9.6 meq) and 1.6 mL of the strongly acidic H-type cation exchange resin "SK1BH" (corresponding to 33% capacity relative to the ion exchange capacity of the anion exchange resin) were mixed in 100 g of the tea extract 3, and the mixture was shaken for 12 hours using a shaker. After that, the resins were removed with #2 filter paper, and ethanol was distilled off from the resultant treated solution at 40°C and 2.7 kPa, followed by adjustment of its water content, thereby obtaining a purified green tea extract. Table 3 shows production conditions of Example 7, and analysis values and evaluation results of the purified green tea extract.

### Example 8

8 mL of the weaklybasic OH-type anion exchange resin "WA30 (OH) " and 2 mL of the strongly acidic H-type cation exchange resin "SK1BH" (corresponding to 33% capacity relative to the exchange capacity of the anion exchange resin) were mixed in 100 g of the tea extract 3, and the mixture was shaken for 4 hours using a shaker. After that, the resins were removed with #2 filter paper, and ethanol was distilled off from the resultant treated solution at 40°C and 2.7 kPa, followed by adjustment of its water content, thereby obtaining a purified green tea extract. Table 3 shows production conditions of Example 8, and analysis values and evaluation results of the purified green tea extract.

### Comparative Example 4

8 mL of the weaklybasic OH-type anion exchange resin "WA10 (OH)" (having an ion exchange capacity of 9.6 meq) was mixed in 100 g of the tea extract 3, and the mixture was shaken for 12 hours using a shaker. After that, the same treatment as that of Example 7 was carried out, thereby obtaining a purified green tea extract. Table 3 shows production conditions of Comparative Example 4, and analysis values and evaluation results of the purified green tea extract.

**[Table 3]**

| | | | Example 7 | Example 8 | Comparative Example 4 |
|---|---|---|---|---|---|
| Anion exchange resin | Resin | | WA10 (OH) | WA30 (OH) | WA10 (OH) |
| | Chemical property | - | Weakly basic | Weakly basic | Weakly basic |
| | Base | - | Acrylic | Styrene-based | Acrylic |
| | Structure | - | Gel-type | Porous-type | Gel-type |
| | Ion exchange capacity | [meq/ml] | 1.2 | 1.5 | 1.2 |
| | Counterion group | - | OH-type | OH-type | OH-type |
| Cation exchange resin | Resin | | SK1BH | SK1BH | - |
| | Chemical property | - | Strongly acidic | Strongly acidic | - |
| | Ion exchange capacity | [meq/ml] | 2.0 | 2.0 | - |
| | Counterion group | - | H-type | H-type | - |
| | Amount used¹⁾ | [%] | 33% | 33% | - |
| Flow conditions | Tea extract | | Tea extract 3 | Tea extract 3 | Tea extract 3 |
| | Order | | Mixture | Mixture | - |
| | Solvent | | 60% ethanol solution in water | 60% ethanol solution in water | 60% ethanol solution in water |
| Analysis values | pH of treated solution | | 5.0 | 5.0 | 7.9 |
| | Yield of the non-polymer catechins | [%] | 92 | 86 | 68 |
| | Gallic acid removal ratio | [%] | 99 | 88 | 97 |
| | Color of treated solution (OD450) | | 0.225 | 0.150 | 1.225 |
| | Sourness | | 3 | 3 | 3 |
| | Coarseness | | 4 | 3 | 1 |

| | | | | | |
|---|---|---|---|---|---|
| 1) Percentage of ion exchange capacity of cation exchange resin relative to ion exchange capacity of anion exchange resin | | | | | |

Table 3 shows specific examples of purification of the tea extract containing the organic solvent aqueous solution (concentration of ethanol: 60 mass%) as a solvent by the batch method. In all the production methods of Examples, the yields of the non-polymer catechins were higher than those in the production method of Comparative Example. In addition, the purified tea extracts had pH values controlled to a weakly acidic region, and significantly improved coarseness compared with Comparative Example, and were excellent in color.

### Example 9

15 mL of the weakly basic OH-type anion exchange resin "WA10 (OH)" and 3 mL of the strongly acidic H-type cation exchange resin "SK1BH" (corresponding to 33% capacity relative to the exchange capacity of the anion exchange resin) were mixed, and a column having an inner diameter of 2.2 cm was filled with the mixture.
Subsequently, the tea extract 3 was allowed to flow under a condition of SV=9 (h⁻¹) relative to the amount of the anion exchange resin, and the flowing of the extract was stopped when the mass ratio of gallic acid/non-polymer catechins in the whole treated solution collected at the column outlet reached 0.044. The bed volume was 570 mL and was 38 times as large as the volume of the anion exchange resin (BV=38 (v/v)). The amount of gallic acid in the tea extract solution which had been allowed to flow was 2.5 g (14.7 meq), and the exchange capacity of the anion exchange resin to gallic acid was 1.22 times by mole.
Ethanol was distilled off from the resultant treated solution at 40°C and 2.7 kPa, followed by adjustment of its water content, thereby obtaining a purified green tea extract. Table 4 shows production conditions of Example 9, and analysis values and evaluation results of the purified green tea extract.

### Example 10

A purified green tea extract was obtained in the same manner as in Example 9 except that the amount of the strongly acidic H-type cation exchange resin "SK1BH" used was changed to 9 mL (corresponding to 100% capacity relative to the exchange capacity of the anion exchange resin). Table 4 shows production conditions of Example 10, and analysis values and evaluation results of the purified green tea extract.

### Example 11

A column having an inner diameter of 2.2 cm was filled with 3 mL of the strongly acidic H-type cation exchange resin "SK1BH" (corresponding to 33% capacity relative to the exchange capacity of the anion exchange resin). Subsequently, another column having an inner diameter of 2.2 cm was filled with 15 mL of the weakly basic OH-type anion exchange resin "WA10(OH)" .
Subsequently, the tea extract 3 was allowed to flow through the columns in an order of the cation exchange resin and the anion exchange resin. It should be noted that the f lowing of the tea extract was carried out under a condition of SV=9 (h⁻¹) relative to the amount of the anion exchange resin. The flowing of the extract was stopped when the mass ratio of gallic acid/non-polymer catechins in the whole treated solution collected at the anion exchange column outlet reached 0.044. Ethanol was distilled off from the resultant treated solution at 40°C and 2.7 kPa, followed by adjustment of its water content, thereby obtaining a purified green tea extract. Table 4 shows production conditions of Example 11, and analysis values and evaluation results of the purified green tea extract.

### Example 12

A column having an inner diameter of 2.2 cm was filled with 3 mL of the strongly acidic H-type cation exchange resin "SK1BH" (corresponding to 33% capacity relative to the exchange capacity of the anion exchange resin) . Subsequently, another column having an inner diameter of 2.2 cm was filled with 15 mL of the weakly basic OH-type anion exchange resin "WA10(OH) " .
Subsequently, the tea extract 3 was allowed to flow through the columns in an order of the anion exchange resin and the cation exchange resin. It shouldbe noted that the flowing of the tea extract was carried out under a condition of SV=9 (h⁻¹) relative to the amount of the anion exchange resin. The flowing of the extract was stopped when the mass ratio of gallic acid/non-polymer catechins in the whole treated solution collected at the column outlet reached 0.044. Ethanol was distilled off from the resultant treated solution at 40°C and 2.7 kPa, followed by adjustment of its water content, thereby obtaining a purified green tea extract. Table 4 shows production conditions of Example 12, and analysis values and evaluation results of the purified green tea extract.

### Example 13

A purified green tea extract was obtained in the same manner as in Example 12 except that the amount of the strongly acidic H-type cation exchange resin "SK1BH" used was changed to 9 mL (corresponding to 100% capacity relative to the exchange capacity of the anion exchange resin). Table 4 shows production conditions of Example 13, and analysis values and evaluation results of the purified green tea extract.

### Comparative Example 5

A column having an inner diameter of 2.2 cm was filled with 15 mL of the weakly basic OH-type anion exchange resin "WA10 (OH) " , and the tea extract 3 was allowed to flow under a condition of SV=9 (h⁻¹). The flowing of the extract was stopped when the mass ratio of gallic acid/non-polymer catechins in the whole treated solution collected at the column outlet reached 0.044. Ethanol was distilled off from the resultant treated solution at 40°C and 2.7 kPa, followed by adjustment of its water content, thereby obtaining a purified green tea extract. Table 4 shows production conditions of Comparative Example 5, and analysis values and evaluation results of the purified green tea extract.

**[Table 4]**

| | | | Example 9 | Example 10 | Example 11 | Example 12 | Example 13 | Comparative Example 5 |
|---|---|---|---|---|---|---|---|---|
| Anion exchange resin | Resin | - | WA10 (OH) | WA10 (OH) | WA10 (OH) | WA10 (OH) | WA10 (OH) | WA10 (OH) |
| | Chemical property | - | Weakly basic | Weakly basic | Weakly basic | Weakly basic | Weakly basic | Weakly basic |
| | Base | - | Acrylic | Acrylic | Acrylic | Acrylic | Acrylic | Acrylic |
| | Structure | - | Gel-type | Gel-type | Gel-type | Gel-type | Gel-type | Gel-type |
| | Ion exchange capacity | [meq/ml] | 1.2 | 1.2 | 1.2 | 1.2 | 1.2 | 1.2 |
| | Counterion group | - | OH-type | OH-type | OH-type | OH-type | OH-type | OH-type |
| Cation exchange resin | Resin | | SK1BH | SK1BH | SK1BH | SK1BH | SK1BH | - |
| | Chemical property | - | Strongly acidic | Strongly acidic | Strongly acidic | Strongly acidic | Strongly acidic | - |
| | Ion exchange capacity | [meq/ml] | 2.0 | 2.0 | 2.0 | 2.0 | 2.0 | - |
| | Counterion group | - | H-type | H-type | H-type | H-type | H-type | - |
| | Amount used¹⁾ | [%] | 33% | 100% | 33% | 33% | 100% | - |
| Flow conditions | Tea extract | | Tea extract 3 | Tea extract 3 | Tea extract 3 | Tea extract 3 | Tea extract 3 | Tea extract 3 |
| | Order | | Mixture | Mixture | H-type → OH-type | OH-type → H-type | OH-type → H-type | - |
| | Solvent | | 60% ethanol solution in water | 60% ethanol solution in water | 60% ethanol solution in water | 60% ethanol solution in water | 60% ethanol solution in water | 60% ethanol solution in water |
| Analysis values | Value at the time of mass ratio of gallic acid/non-polymer catechins=0.044 | | | | | | | |
| | pH of treated solution | - | 5.6 | 5.3 | 5.0 | 5.0 | 4.2 | 6.6 |
| | Bv | - | 38 | 27 | 35 | 40 | 40 | 40 |
| | Yield of the non-polymer catechins | [%] | 92 | 92 | 92 | 93 | 93 | 93 |
| | Color of treated solution (OD450) | - | 0.200 | 0.180 | 0.190 | 0.160 | 0.160 | 0.330 |
| | Sourness | | 3 | 3 | 3 | 3 | 3 | 3 |
| | Coarseness | | 3 | 4 | 3 | 3 | 4 | 1 |

| | | | | | | | | |
|---|---|---|---|---|---|---|---|---|
| 1) Percentage of ion exchange capacity of cation exchange resin relative to ion exchange capacity of anion exchange resin | | | | | | | | |

Table 4 shows specific examples of purification of the tea extract containing the organic solvent aqueous solution (concentration of ethanol: 60 mass%) as a solvent in the column made. In all the production methods of Examples, compared with the production method of Comparative Example, the purified tea extracts had pH values controlled to a weakly acidic region, and significantly improved coarseness compared with Comparative Example, and were excellent in color.

## Claims

1. A production method for a purified tea extract, comprising bringing a tea extract into contact with an OH-type anion exchange resin and an H-type cation exchange resin.

2. The production method for a purified tea extract according to claim 1, wherein the tea extract is brought into contact with a mixture of the OH-type anion exchange resin and the H-type cation exchange resin.

3. The production method for a purified tea extract according to claim 1, wherein the tea extract is brought into contact with the H-type cation exchange resin, and subsequently brought into contact with the OH-type anion exchange resin.

4. The production method for a purified tea extract according to claim 1, wherein the tea extract is brought into contact with the OH-type anion exchange resin, and subsequently brought into contact with the H-type cation exchange resin.

5. The production method for a purified tea extract according to any one of claims 1 to 4, wherein the OH-type anion exchange resin is a weakly basic OH-type anion exchange resin.

6. The production method for a purified tea extract according to any one of claims 1 to 3, wherein the OH-type anion exchange resin is a strongly basic OH-type anion exchange resin.

7. The production method for a purified tea extract according to any one of claims 1 to 6, wherein the OH-type anion exchange resin has a gel-type base structure.

8. The production method for a purified tea extract according to anyone of claims 1 to 7, wherein the tea extract is a tannase-treated tea extract.

9. The production method for a purified tea extract according to any one of claims 1 to 8, wherein the tea extract comprises an organic solvent as a solvent.
